# EUROPEAN PATENT SPECIFICATION

(11) **EP 2 584 017 B1**
(45) Date of publication and mention of the grant of the patent: **25.04.2018**
(21) Application number: 11795819.9
(22) Date of filing: 16.06.2011
(51) Int. Cl.: F16D 69/02

(54) **FRICTION MATERIAL**
REIBUNGSMATERIAL
MATÉRIAU DE FROTTEMENT

(30) Priority: 18.06.2010 JP 2010139517
(43) Date of publication of application: 24.04.2013
(73) Proprietor: Akebono Brake Industry Co., Ltd., Tokyo 103-8534 (JP)
(72) Inventor: YAMAMOTO, Hiroshi, Tokyo (JP); SUGIE, Rie, Tokyo (JP); SHITARA, Masayo, Tokyo (JP); HIKICHI, Akihiro, Tokyo (JP)
(74) Representative: Grünecker Patent- und Rechtsanwälte PartG mbB
(86) International application number: PCT/JP2011/063851
(87) International publication number: WO 2011/158917

(56) References cited:
- WO-A1-2008/123046
- JP-A- S5 877 936
- JP-A- 2004 035 871
- JP-A- 2009 132 816
- JP-A- 2009 155 439
- US-A1- 2004 164 438

## Description

### TECHNICAL FIELD

The present invention relates to a friction material, particularly, a friction material such as disc brake pad and brake lining used for automobiles, railroad vehicles, industrial machines and the like.

### BACKGROUND ART

Along with recent sophistication and speeding-up of vehicles, the function required to a brake becomes increasingly severe.

Patent Document 1 has proposed a non-asbestos friction material comprising a fibrous material, a binder, a lubricant and other fillers. The friction material contains calcium pyrophosphate as the filler in an amount of 4 to 6 vol% of the entire friction material, and cryolite in an amount of 3 to 5 vol% of the entire friction material. In the non-asbestos friction material, a friction coefficient is maintained during occurrence of an occurrence of fade, and even when a stopped state under pressure is maintained after the occurrence of fade in a high temperature region, a part of the friction material is not separated and stuck to the other party material. A further friction material is known from US 2004/0164438 A1. The friction material known from said prior art comprises a fibrous material, a resin binder, 2 to 10 vol% of an inorganic flake material, and 5 to 20 vol% of carbonaceous particles of 0.5 to 10 mm in the largest dimensions. Further friction materials are for instance known from JP S58 77936 A and JP 2009 155439 A.

### CITATION LIST

### PATENT DOCUMENT

Patent Document 1: JP-A-2009-132816

### SUMMARY OF INVENTION

### TECHNICAL PROBLEM

However, due to the recent trend toward weight reduction of vehicles, it is required to suppress reduction of the friction coefficient of a friction material during occurrence of fade under high-temperature high-load conditions. Furthermore, sticking of a friction material to a disc rotor, which occurs when the friction material is placed in a pressurized state immediately after heat history corresponding to occurrence of fade, brings about a trouble such as eccentric wear of the friction material and vibration, and it is important to prevent sticking.

Also, due to the trend to reduce the weight of vehicles, there is a pressing need for increasing the high-temperature strength of the friction material.

In conventional friction materials, a reinforcing filler has been used so as to increase the strength of the friction material, but among these fillers, a whisker filler is undesirable in view of environmental hygiene. A plate-like or flake-like filler is used in place of the whisker filler, but under high-temperature high-load conditions, use of such a filler may cause increased wear, cracking or chipping due to insufficient strength of the friction material and impair the brake function, as compared with use of a whisker filler. In particular, a friction material sufficiently assured to keep its strength in a high temperature region where the rotor temperature reaches 400°C or more is demanded.

An object of the present invention is to provide a friction material ensuring that reduction of the friction coefficient during occurrence of fade under high-temperature high-load conditions as well as sticking to a disc rotor immediately after heat history are suppressed and the friction material strength in a high temperature region is enhanced.

### SOLUTION TO PROBLEM

The aforesaid problem is solved by a friction material defined in claim 1. A further preferred embodiment of the friction material is given in claim 2.

### ADVANTAGEOUS EFFECT OF INVENTION

According to the present invention, reduction of the friction coefficient during occurrence of fade under high-temperature high-load conditions as well as sticking to a disc rotor immediately after heat history can be suppressed and not only the friction material strength in a high temperature region where the rotor temperature reaches 400°C or more is enhanced but also the friction material wear amount at the same temperature can be reduced.

### BRIEF DESCRIPTION OF DRAWINGS

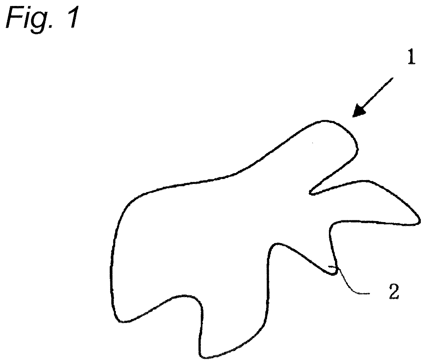

Fig. 1 is a projection view for explaining an example of the inorganic filler having a plurality of convex parts for use in the present invention.

### DESCRIPTION OF EMBODIMENTS

The friction material of the present invention comprises a fibrous material; a binder; and a friction modifier, wherein the friction modifier contains an artificial graphite having an average particle diameter of 1,000 to 3,000 µm; zinc powder, wherein the content of the zinc powder is from 0.2 to 3 vol% of the entire friction material; and an inorganic filler having a plurality of convex parts, wherein the inorganic filler is at least one selected from a group consisting of barium sulfate, calcium carbonate and potassium titanate. In the present invention, an artificial graphite having the above-described specific size is used as a part of the friction modifier, where the friction material is protected due to lubricating effect at a high temperature and covering of the pad surface with the formed coating of the component and the component contributes to improving the interface state between the rotor and the friction material during occurrence of fade under high-temperature high-load conditions. Also, an inorganic filler having a plurality of convex parts is used as a part of the friction modifier, and this component contributes to enhancing the friction material strength mainly in a high temperature. It is considered that the above-described effects of the present invention can be brought out by these two components. The effects are more improved by further using zinc powder in combination, in addition to those two components.

The friction material of the present invention is described below for every component.

### [Friction Modifier]

### (Artificial Graphite)

The artificial graphite for use in the present invention has an average particle diameter of 1,000 to 3,000 µm, preferably from 1,000 to 2,000 µm, more preferably from 1,000 to 1,500 µm. If the average particle diameter is less than 1,000 µm, the contact area with the rotor is increased, and sticking of the pad to the rotor is generated during occurrence of fade under high-temperature high-load conditions. If the average particle diameter exceeds 3,000 µm, the dispersibility as a blended material is extremely deteriorated and blending cannot be uniformly achieved. This average particle diameter is a value as measured by a laser diffraction particle size distribution meter. The same applies to the average particle diameters of other powders.

Examples of the artificial graphite include a graphite obtained by forming a mixture of a coke powder or the like and a pitch or the like, temporarily firing the formed mixture at approximately from 1,000 to 1,300°C, and through a graphitization step at about 3,000°C, artificially growing the crystal. In addition, the production method of the artificial graphite is not particularly limited. The Shore hardness of the artificial graphite is preferably from 17 to 27. Preferably, the crystal structure of the artificial graphite is a hexagonal structure.

The content of the artificial graphite for use in the present invention is preferably from 1 to 9 vol%, more preferably from 2 to 6 vol%, of the entire friction material. If the content is less than 1 vol%, the artificial graphite lacks the lubricating performance and the wear amount of the friction material increases. If the content exceeds 9 vol%, the lubricating performance becomes excessive and the friction coefficient (effect) decreases.

As to the artificial graphite for use in the present invention, by employing the specific preferred ranges out of the ranges above, the effects of the present invention, particularly anti-sticking property and braking property, can be more effectively brought out.

### (Inorganic Filler Having a Plurality of Convex Parts)

The frictional material of the present invention contains an inorganic filler having a plurality of convex parts. The inorganic filler having the convex parts is more effective for obtaining a friction material improved in the frictional material strength mainly in a high temperature region and can maintain inhibition of reduction in the friction coefficient during occurrence of fade under high-temperature high-load conditions and inhibition of sticking to a disc rotor immediately after heat history. Hereinafter, the inorganic filler having the convex parts is also referred to as "inorganic filler of this application".

In the present invention, the inorganic filler of this application means that a three-dimensional geometry of a particle has a plurality of convex parts. The "having a plurality of convex parts" as used herein means that the projection geometry of the inorganic filler of this application on a flat plane can take a geometry at least differing from the normal polygon, circle, ellipse or the like and having a convex part in two or more directions. Specifically, the convex part indicates a portion corresponding to a portion protruding from a polygon, circle, ellipse or the like (basic figure) which is applied to a photograph (projection view) taken by an optical or electronic microscope or the like. The projection view of the inorganic filler 1 of this application includes, for example, a projection view shown in Fig. 1, where the convex part is indicated by numeral 2. The specific three-dimensional geometry of the inorganic filler of this application includes, for example, a boomerang shape, a cross shape, an ameba shape, a shape of a part (for example, hand, horn or leaf) or the entirety of various animals and plants, a shape analogous thereto, and a confetto shape.

The average particle diameter of the inorganic filler of this application is preferably from 1 to 50 µm, more preferably from 5 to 20 µm.

The inorganic filler is at least one selected from the group consisting of barium sulfate, calcium carbonate, and potassium titanate. For example, potassium titanate described in Patent Publication WO-2008-123046 can be used.

Examples of the production method for the inorganic filler of this application include, in the case where the inorganic filler of this application is a salt, a method of physically pulverizing an oxide, a salt or the like of an atom constituting an inorganic filler having a normal geometry, then applying a shear stress by means of a vibration mill or the like to make a mixture having high reaction activity, and thereafter firing the mixture to change the crystal structure into a structure differing from the normal geometry, thereby producing the inorganic filler of this application.

The inorganic filler of this application is preferably contained in an amount of 2 to 35 vol%, more preferably from 10 to 20 vol%, of the entire friction material. If the content is less than 2 vol%, the inorganic filler of this application cannot be expected to produce a reinforcing effect. If the content exceeds 35 vol%, the compression deformation amount of the pad is reduced and the vibration characteristics are deteriorated.

As to the inorganic filler of this application, by employing the specific preferred ranges out of the ranges above, the effects of the present invention, particularly mechanical strength and wear resistance, can be more effectively brought out.

In the present invention, it is considered that the inorganic filler of this application anchors its convex part to the binder and thereby contributes to the above-described effects.

### (Zinc Powder)

The zinc powder for use in the present invention preferably has an average particle diameter of 1 to 20 µm, more preferably from 1 to 10 µm, still more preferably from 2 to 6 µm.

The zinc powder is not particularly limited in its production method.

The zinc powder for use in the present invention is contained in an amount of 0.2 to 3 vol%, more preferably from 0.2 to 1.5 vol%, of the entire friction material. If the content is less than 0.2 vol%, a protective film of zinc cannot be formed on the rotor surface and sticking of the pad to the rotor occurs during occurrence of fade under high-temperature high-load conditions. If the content exceeds 3 vol%, the transfer amount of zinc as a low-melting-point metal to the rotor is extremely increased and the friction coefficient (effect) during occurrence of fade under high-temperature high-load conditions is decreased.

As to the zinc powder for use in the present invention, by employing the specific preferred ranges out of the ranges above, the effects of the present invention, particularly anti-sticking property and braking property, can be more effectively brought out.

### (Other Friction Modifiers)

Examples of the friction modifier for use in the present invention include a metal oxide other than the inorganic filler of this application, such as alumina, silica, magnesia, zirconia, chromium oxide, molybdenum dioxide and zirconium silicate, an organic dust such as synthetic rubber and cashew resin, a metal such as copper, aluminum and tin, a mineral such as vermiculite and mica, and a salt other than the inorganic filler of this application, such as barium sulfate, potassium titanate and calcium carbonate. One of these may be used alone, or two or more thereof may be used in combination. Such a modifier is used in the form of powder or the like, and the particle diameter and the like are variously selected.

In the present invention, the friction modifier is used in an amount of usually from 30 to 80 vol%, preferably from 60 to 80 vol%, of the entire friction material. Here, the friction modifier includes the artificial graphite of this application, zinc powder, and the inorganic filler of this application.

### [Fibrous material]

The fibrous material for use in the present invention may be of organic or inorganic type. Examples of the organic type include an aromatic polyamide (aramid) fiber and a polyacrylic fiber, and examples of the inorganic type include a metal fiber such as copper and steel, a potassium titanate fiber, an Al₂O₃-SiO₂-based ceramic fiber, a glass fiber, a carbon fiber, and a rock wool. One of these is used alone, or two or more thereof are used in combination.

In the present invention, the fibrous material is used in an amount of usually from 2 to 40 vol%, preferably from 5 to 20 vol%, of the entire friction material.

### [Binder]

The binder for use in the present invention includes a thermosetting resin such as phenol resin (including a straight phenol resin and various modified phenol resins modified with rubber or the like), melamine resin, epoxy resin and polyimide resin.

In the present invention, the binder is used in an amount of usually from 10 to 30 vol%, preferably from 14 to 20 vol%, of the entire friction material.

### [Production of Friction Material]

In producing the friction material of the present invention, the above-described components are blended, and the blend is preformed according to a normal production method and subjected to a treatment such as thermoforming, heating and polishing, whereby the friction material can be produced.

The preformed body of the friction material is formed into a predetermined shape by sheet-metal pressing, then subjected to a degreasing treatment and a primer treatment, and passed through a thermoforming step of thermoforming a pressure plate coated with an adhesive and the preformed body at a predetermined temperature and pressure to integrally fix both members and a step of performing after-curing and finally applying a finish treatment, whereby a brake pad with the above-described friction material can be produced.

### EXAMPLES

The present invention is specifically described below by referring to Examples. However, the present invention is not limited only to these Examples.

### <Embodiments 1 to 15 and Comparative Examples 1 to 11 >

Blended materials for a friction material according to the formulation (vol%) shown in Tables 1 to 3 were uniformly mixed by a stirrer to obtain a friction material mixture. Subsequently, the friction material mixture was preformed at room temperature and a pressure of 6 MPa, then formed under heat and pressure at a temperature of 150°C and a pressure of 9 MPa for 6.5 minutes, heat-treated at a temperature of 250°C and a pressure of 3,920 N for 3.5 hours to obtain a friction material. The obtained friction material was evaluated by the following methods. Incidentally, the friction materials of Embodiment 7 and Embodiment 14 are the same friction material.

### 1) 10th Braking Fade, Friction Coefficient and Sticking:

By performing a combination of burnish based on the standard of JASO (Japanese Automotive Standards Organization) C406 and only a first occurrence of fade by a dynamo tester, the friction coefficient was measured and the presence or absence of sticking to the rotor was confirmed with an eye. The number of burnishes was set to 200, and the conditions were set such that the deceleration during the occurrence of fade test becomes 9.8 m/s² and the 10th rotor final temperature reaches 650°C. At the 10th braking, the stopped state was kept for 2 minutes while leaving a pressure of 10 MPa to act on the friction material and after releasing the pressure and then rotating the rotor, sticking was confirmed. The rating is as follows.

### Friction coefficient:

The rating was indicated as "YES" when the value of friction coefficient was 0.30 or more.

### Sticking:

Whether or not the friction material partially peeled off from the pad and stuck to the rotor due to high-temperature high-load braking was confirmed with an eye.

### 2) 400°C Shear Strength:

A test piece (30×10×4.8 mm thickness) of the friction material above was produced and measured in accordance with JIS (Japanese Industrial Standards) D4422.

### 3) 400°C Friction Material Wear Amount:

A wear test at 400°C was performed by a dynamo tester in accordance with JASO C427.

**[Table 1]**

| | | Embodiment | | | | | | | | | | | |
|---|---|---|---|---|---|---|---|---|---|---|---|---|---|
| | | 1* | 2* | 3* | 4* | 5 | 6 | 7 | 8 | 9 | 10 | 11 | 12 |
| Fibrous material | Aramid fiber | 8.0 | 8.0 | 8.0 | 8.0 | 8.0 | 8.0 | 8.0 | 8.0 | 8.0 | 8.0 | 8.0 | 8.0 |
| | Rock wool | 3.0 | 3.0 | 3.0 | 3.0 | 3.0 | 3.0 | 3.0 | 3.0 | 3.0 | 3.0 | 3.0 | 3.0 |
| | Copper fiber | -4.0 | 4.0 | 4.0 | 4.0 | 4.0 | 4.0 | 4.0 | 4.0 | 4.0 | 4.0 | 4.0 | 4.0 |
| Binder | Phenol resin | 17.0 | 17.0 | 17.0 | 17.0 | 17.0 | 17.0 | 17.0 | 17.0 | 17.0 | 17.0 | 17.0 | 17.0 |
| Friction modifier | Cashew dust | 8.0 | 8.0 | 8.0 | 8.0 | 8.0 | 8.0 | 8.0 | 8.0 | 8.0 | 8.0 | 8.0 | 8.0 |
| | Rubber dust | 8.0 | 8.0 | 8.0 | 8.0 | 8.0 | 8.0 | 8.0 | 8.0 | 8.0 | 8.0 | 8.0 | 8.0 |
| | Barium sulfate | 33.0 | 32.0 | 28.0 | 25.0 | 32.8 | 31.8 | 27.8 | 24.8 | 30.0 | 29.0 | 25.0 | 22.0 |
| | Potassium titanate (this application) | 15.0 | 15.0 | 15.0 | 15.0 | 15.0 | 15.0 | 15.0 | 15.0 | 15.0 | 15.0 | 15.0 | 15.0 |
| | Zirconium oxide | 3.0 | 3.0 | 3.0 | 3.0 | 3.0 | 3.0 | 3.0 | 3.0 | 3.0 | 3.0 | 3.0 | 3.0 |
| | Graphite (particle size: 600 µm) | 0.0 | 0.0 | 0.0 | 0.0 | 0.0 | 0.0 | 0.0 | 0.0 | 0.0 | 0.0 | 0.0 | 0.0 |
| | Graphite (particle size: 1,000 µm or more) | 1.0 | 2.0 | 6.0 | 9.0 | 1.0 | 2.0 | 6.0 | 9.0 | 1.0 | 2.0 | 6.0 | 9.0 |
| | Zinc powder | 0.0 | 0.0 | 0.0 | 0.0 | 0.2 | 0.2 | 0.2 | 0.2 | 3.0 | 3.0 | 3.0 | 3.0 |
| Tenth braking occurrence of fade Friction coefficient [-] | | YES | YES | YES | YES | YES | YES | YES | YES | YES | YES | YES | YES |
| Sticking | | none | none | none | none | none | none | none | none | none | none | None | none |

| | | | | | | | | | | | | | |
|---|---|---|---|---|---|---|---|---|---|---|---|---|---|
| * Those embodiments are outside of the range defined in claim 1 due to the lower zinc content. | | | | | | | | | | | | | |

**[Table 2]**

| | | Comparative example | | | | | | | |
|---|---|---|---|---|---|---|---|---|---|
| | | 1 | 12 | 13 | 4 | 5 | 6 | 7 | 18 |
| Fibrous material | Aramid fiber | 8.0 | 8.0 | '8.0 | 8.0 | 8.0 | 8.0 | 8.0 | '8.0 |
| | Rock wool | 3.0 | 3.0 | 3.0 | 3.0 | 3.0 | 3.0 | 3.0 | 3.0 |
| | Copper fiber | -4.0 | 4.0 | 4.0 | 4.0 | 4.0 | 4.0 | 4.0 | 4.0 |
| Binder | Phenol resin | 17.0 | 17.0 | 17.0 | 17.0 | 17.0 | 17.0 | 17.0 | 17.0 |
| Friction modifier | Cashew dust | -8.0 | 8.0 | 8.0 | 8.0 | 8.0 | 8.0 | 8.0 | 8.0 |
| | Rubber dust | 8.0 | 8.0 | 8.0 | 8.0 | 8.0 | 8.0 | 8.0 | 8.0 |
| | Barium sulfate | 33.0 | 32.0 | 28.0 | 25.0 | 32.8 | 31.8 | 27.8 | 24.8 |
| | Potassium titanate (this application) | 15.0 | 15.0 | 15.0 | 15.0 | 15.0 | 15.0 | 15.0 | 15.0 |
| | Zirconium oxide | 3.0 | 3.0 | 3.0 | 3.0 | 3.0 | 3.0 | 3.0 | 3.0 |
| | Graphite (particle size: 600 µm) | 1.0 | 2.0 | 6.0 | 9.0 | 1.0 | 2.0 | 6.0 | 9.0 |
| | Graphite (particle size: 1,000 µm or more) | 0.0 | 0.0 | 0.0 | 0.0 | 0.0 | 0.0 | 0.0 | 0.0 |
| | Zinc powder | -0.0 | 0.0 | 0.0 | 0.0 | 0.2 | 0.2 | 0.2 | 0.2 |
| Tenth braking occurrence of fade Friction coefficient [-] | | NO | NO | NO | NO | NO | NO | NO | NO |
| Sticking | | observed | observed | observed | observed | observed | observed | observed | observed |

**[Table 3]**

| | Embodiment | Embodiment 13 | Embodiment 14 | Embodiment 15 | Comparative example 9 | Comparative example 10 | Comparative example 11 |
|---|---|---|---|---|---|---|---|
| Fibrous material | Aramid fiber | 8.0 | 8.0 | 8.0 | 8.0 | 8.0 | 8.0 |
| | Rock wool | 3.0 | 3.0 | 3.0 | 3.0 | 3.0 | 3.0 |
| | Copper fiber | 4.0 | 4.0 | 4.0 | 4.0 | 4.0 | 4.0 |
| Binder | Phenol resin | 17.0 | 17.0 | 17.0 | 17.0 | 17.0 | 17.0 |
| Friction modifier | Cashew dust | 8.0 | 8.0 | 8.0 | 8.0 | 8.0 | 8.0 |
| | Rubber dust | 8.0 | 8.0 | 8.0 | 8.0 | 8.0 | 8.0 |
| | Barium sulfate | 40.8 | 27.8 | 7.8 | 40.8 | 27.8 | 7.8 |
| | Potassium titanate (this application) | 2.0 | 15.0 | 35.0 | 0.0 | 0.0 | 0.0 |
| | Potassium titanate (plate-like) | 0.0 | 0.0 | 0.0 | 2.0 | 15.0 | 35.0 |
| | Zirconium oxide | -3.0 | 3.0 | 3.0 | 3.0 | 3.0 | 3.0 |
| | Graphite (particle size; 1,000 µm or more) | 6.0 | 6.0 | 6.0 | 6.0 | 6.0 | 6.0 |
| | Zinc powder | 0.2 | 0.2 | 0.2 | 0.2 | 0.2 | 0.2 |
| Test piece 400°C shear strength (kN) | | 1.3 | 1.4 | 1.3 | 1.0 | 0.8 | 0.8 |
| 400°C Friction material wear amount (mm) | | 1.20 | 1.18 | 1.23 | 1.54 | 1.67 | 1.70 |

In the Tables, potassium titanate (this application) is the inorganic filler of this application having an average particle diameter of 10 µm (trade name: TERRACESS JP, produced by Otsuka Chemical Co., Ltd.). Furthermore, potassium titanate (plate-like) is a plate-like particle having an average particle diameter of 10 µm and being different from the inorganic filler of this application. Incidentally, the particle size of the artificial graphite has the same meaning as the average particle diameter. Also, the above-described friction modifiers except for potassium titanate (this application) are not the inorganic filler of this application.

It is seen from the Tables above that when an artificial graphite having the average particle diameter of this application is used, the friction coefficient at 10th braking occurrence of fade is large, sticking is not caused, and furthermore, because the shear strength at 400°C is high and the friction material wear amount at the same temperature is small, not only the strength in a high temperature region where the rotor temperature reaches 400°C or more can be enhanced but also the durability is excellent. Also, comparison between Embodiments 13 to 15 and Comparative examples 9 to 11 reveals that when the inorganic filler of this application is used in combination with artificial graphite and zinc powder in place of a plate-like filler, the shear strength and friction material wear amount at 400°C are more improved.

The friction material of the present invention is useful particularly as a friction material such as disc brake pad and brake lining used for automobiles, railroad vehicles, industrial machines and the like.

### REFERENCE SIGNS LIST

- 1: Inorganic filler having a plurality of convex parts
- 2: Convex part

## Claims

1. A friction material comprising:
a fibrous material;
a binder; and
a friction modifier,
wherein the friction modifier contains an artificial graphite having an average particle diameter of 1,000 to 3,000 µm; zinc powder, wherein the content of the zinc powder is from 0.2 to 3 vol% of the entire friction material; and an inorganic filler having a plurality of convex parts, wherein the inorganic filler is at least one selected from a group consisting of barium sulfate, calcium carbonate and potassium titanate.

2. The friction material according to claim 1, wherein
content of the artificial graphite is from 1 to 9 vol% of the entire friction material, and content of the inorganic filler having the convex parts is from 2 to 35 vol% of the entire friction material.

## Patentansprüche

1. Reibungsmaterial, umfassend:
ein faseriges Material;
einen Binder; und
einen Reibungsmodifizierer,
wobei der Reibungsmodifizierer künstlichen Graphit mit einem durchschnittlichen Teilchendurchmesser von 1.000 bis 3.000 µm enthält;
Zinkpulver, wobei der Gehalt des Zinkpulvers 0,2 bis 3 Vol.-% des gesamten Reibungsmaterial beträgt; und
einen anorganischen Füllstoff mit einer Vielzahl von konvexen Abschnitten, wobei der anorganische Füllstoff mindestens einer ist, ausgewählt aus einer Gruppe, bestehend aus Bariumsulfat, Calciumcarbonat und Kaliumtitanat.

2. Reibungsmaterial, nach Anspruch 1, wobei
der Gehalt des künstlichen Graphits 1 bis 9 Vol.-% des gesamten Reibungsmaterials beträgt, und
der Gehalt des anorganischen Füllstoffs mit den konvexen Abschnitten 2 bis 35 Vol.-% des gesamten Reibungsmaterials beträgt.

## Revendications

1. Matériau de frottement comprenant:
un matériau fibreux;
un liant; et
un modificateur de frottement,
dans lequel le modificateur de frottement contient un graphite artificiel ayant un diamètre particulaire moyen 1000 à 3000 µm; de la poudre de zinc, dans laquelle la teneur en poudre de zinc est de 0,2 à 3 % en volume de l'ensemble du matériau de frottement; et une charge inorganique présentent une pluralité de parties convexes, dans laquelle le matière de remplissage inorganique est au moins une matière choisie parmi un groupe constitué de sulfate de baryum, de carbonate de calcium et de titanate de potassium.

2. Matériau de frottement selon la revendication 1, dans lequel
la teneur en graphite artificiel est compris entre 1 et 9 % en volume du matériau de frottement entier, et la teneur en matière inorganique contenant les parties convexes est compris entre 2 et 35 % en volume du matériau de frottement entier.
